# EUROPEAN PATENT SPECIFICATION

(11) **EP 2 134 014 B1**
(45) Date of publication and mention of the grant of the patent: **13.10.2010**
(21) Application number: 08305264.7
(22) Date of filing: 13.06.2008
(51) Int. Cl.: H04J 3/16

(54) **Method for transmitting two superimposed digital signals and corresponding transmission system**
Verfahren zur Übertragung von zwei übereinander gelagerten digitalen Signalen und entsprechendes Übertragungssystem
Procédé de transmission de deux signaux numériques superposés et système de transmission correspondant

(43) Date of publication of application: 16.12.2009
(73) Proprietor: Alcatel Lucent, 75008 Paris (FR)
(72) Inventor: Pöhlmann, Wolfgang, 71282, Hemmingen (DE)
(74) Representative: Brose, Gerhard

(56) References cited:
- WO-A-2008/035414
- DE-A1- 4 029 556
- DE-A1- 19 634 714
- US-A- 4 763 326

## Description

The invention relates to a method for transmitting two superimposed digital signals according to the preamble of claim 1, and to a transmission system according to the preamble of claim 2.

The problem underlying the invention arose in the field of optical access networks for telecommunications, particularly in the field of so-called passive optical networks, PONs, that do not really need to be absolutely passive.

A passive optical network in the access area of a telecommunication's network mainly is a tree-shaped network built out of at least one splitter and optical fibers. The root of such network is connected to a central station; the other ends lie within subscribers' premises and are terminated with the subscribers' terminal equipments.

In such network necessarily each subscriber's terminal gets not only the data signals intended for this subscriber but also the data signals for all other subscribers connected to such network. The transmission modes of these various signals cannot be chosen individually for each signal. As a rule the modes only differ in wavelength or in rate of transmission, whereby only a few wavelengths or rates of transmission are used in common by all subscriber's terminals.

The reason for using more than one wavelength or more than one rate of transmission is not separating the signals of the individual subscribers data, but increasing the capacity of the network. Alone the use of higher rates of transmission increases the capacity; the simultaneous use of more than one rate of transmission enforces this effect. The use of lower and higher rates of transmission also is a means for upgrading the network step by step from a network starting with only the lower rate of transmission.

On the one hand it is highly appreciated when the signals with the lower rate of transmission are in some kind of synchronism to the signals with the higher rate of transmission. On the other hand design freedom with respect to new rates of transmission is wanted as well.

It is clear that such situation not only arises in PONs in optical access network, but is of a more general type. The solution found and described below therefore is more general as well and is described in more general terms.

Examples of such applications of transmitting two superimposed signals with different rates of transmission in other fields of the technique are to be found in US A 4,763,326 and in DE 196 34 714 A1.

The problem according to the invention is solved by a method for transmitting according to the teaching of claim 1 and by a transmission system according to the teaching of claim 2.

With this solution a kind of bitwise synchronism is reached.

Further embodiments of the invention are to be found in the subclaims and in the accompanying description.

In the following the invention will be described with the aid of the accompanying drawing.
- Figure 1: shows a transmission system that can be operated with a method according to the invention than being a sys- tem according to the invention.
- Figure 2: shows a bit sequence prior to applying the method ac- cording to the invention.
- Figure 3: shows a bit sequence with the method according to the invention applied.

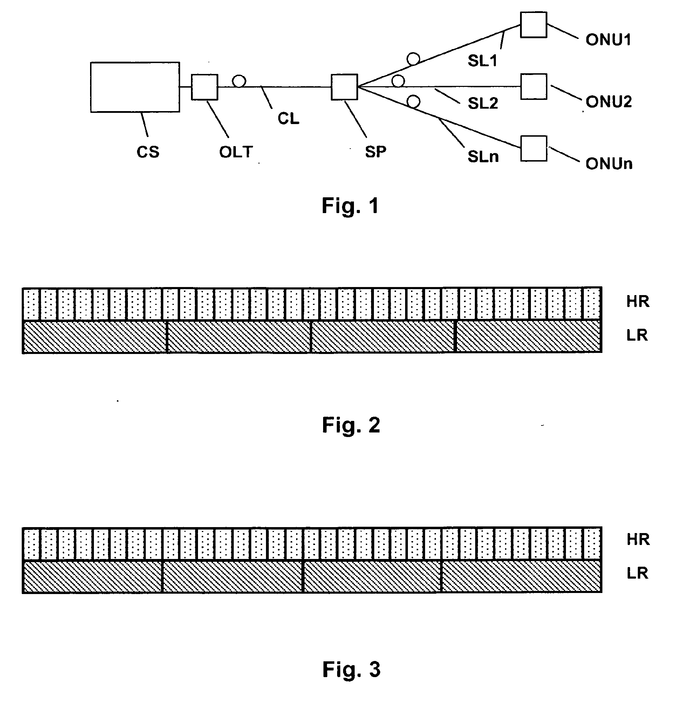

Figure 1 shows a transmission system with a central station CS with an optical line termination OLT attached, an optical splitter SP, and three optical network units ONU1, ONU2, and ONUn, representing a plurality of such units.

The splitter SP is connected to the optical line termination OLT via an optical central line, whereas each of the optical network units ONU1, ONU2, and ONUn is connected to the splitter via an optical subscriber line SL1, SL2, and SLn, respectively.

Instead of a single optical network unit a couple thereof could be linked to the side of the splitter SP directed to the optical network units and including a further splitter. Thus such tree could not be branched only once but even repeatedly.

Strictly speaking the central station CS does not belong to the transmission system, and a couple of transmission systems belongs to one and the same central station.

What here is called a splitter does not necessarily mean an absolute passive element. The inclusion of some kind of regenerating features like amplification, reshaping or retiming does not avoid the problems underlying the invention and therefore does not hinder the application thereof.

Figure 2 does not show a real signal as such but the frames for such signals. There are two such frames, namely one frame HR with a higher rate of transmission and one frame LR with a lower rate of transmission. In this example 33 bits of the frame HR with the higher rate of transmission, here shown with a dotted shading, are superimposed to four bits of the frame LR with the lower rate of transmission, here with an inclined shading.

In the example underlying the invention and shown here the lower rate of transmission is 1.25 Gbps, and the higher rate of transmission is 10.3125 Gbps. The reason for such uneven rate lies in the design of the system and is of no relevance here.

Without applying the method according to the invention one bit of the signal with the lower rate of transmission lasts 800 ps, and one bit of the signal with the higher rate of transmission lasts 0.096.. ps. Only after four bits of the signal with the lower rate of transmission, here equaling to 33 bits of the signal with the higher rate of transmission, a balance between the two signals is reached here.

Actually only the superimposition of the two signals exists. If edges of the bits (transitions) of the signal with the higher rate of transmission are next to, but not coincident with edges of the bits of the signal with the lower rate of transmission then in the superimposed signal, such edge or transition is shifted back or forth, making it difficult to perform a correct decision on the superimposed signal.

In figure 3 the edges of the bits of the signal with the lower rate of transmission are delayed or brought forward such that they always coincide with edges of the bits of the signal with the higher rate of transmission. Three bits of 775.75 ps are followed by one bit of 872.75 ps. This could be interpreted, or technically reached, with the lower rate of transmission switching between some 1.29 Gbps and some 1.15 Gbps, or as temporarily slightly augmenting and temporarily slightly decreasing the lower rate of transmission such that in proportion to the lower rate of transmission.

Situations might occur, where it is not absolutely necessary, that both digital signals be synchronized with respect to one another such that transitions between bits of the coincide with transitions between bits of the signal with the higher rate of transmission. Also a constant shift of, say, halve a bit length of the signal with the higher rate of transmission, under certain circumstances could be acceptable or even necessary.

It has been shown, at least in the situation underlying the invention, that the synchronization means in the equipment foreseen for interworking with signals with the lower rate of transmission only, are not affected in their proper functioning.

Delaying or bringing forward edges or transitions between bits in the signal with the lower rate of transmission may be easily performed by measures known in the art, like the use of counters, may be in connection with suitable control loops. Such measures in our example are performed within the optical line termination OLT.

## Claims

1. Method for transmitting two superimposed digital signals with rates of transmission (LR, HR) differing such that they are not in an integer proportion, **characterized in that** the lower rate of transmission temporarily is slightly augmented and temporarily is slightly decreased such that in proportion to the lower rate of transmission (LR) bit by bit an integer proportion of the proportion of the rates of transmission (LR, HR) exists.

2. Transmission system for transmitting two superimposed digital signals with rates of transmission (LR, HR) differing such that they are not in an integer proportion, **characterized in that** it includes means (OLT) for temporarily slightly augmenting and temporarily slightly decreasing the lower rate of transmission such that in proportion to the lower rate of transmission bit by bit an integer proportion of the proportion of the rates of transmission (LR, HR) exists.

3. Transmission system according to claim 2, **characterized in that** it is an optical access network.

4. Method according to claim 1, **characterized in that** both digital signals are synchronized with respect to one another such that transitions between bits of the signal with the lower rate of transmission (LR) coincide with transitions between bits of the signal with the higher rate of transmission (HR).

## Patentansprüche

1. Verfahren zur Übertragung von zwei überlagerten digitalen Signalen mit Übertragungsraten (LR, HR), welche sich derart unterscheiden, dass sie nicht in einem ganzzahligen Größenverhältnis zueinander liegen, **dadurch gekennzeichnet,**
**dass** die niedrigere Übertragungsrate vorübergehend leicht erhöht und vorübergehend leicht gesenkt wird, so dass im Verhältnis zur niedrigeren Übertragungsrate (LR) Bit für Bit ein ganzzahliges Größenverhältnis des Anteils der Übertragungsraten (LR, HR) besteht.

2. Übertragungssystem zur Übertragung von zwei überlagerten digitalen Signalen mit Übertragungsraten (LR, HR), welche sich derart unterscheiden, dass sie nicht in einem ganzzahligen Größenverhältnis zueinander liegen, **dadurch gekennzeichnet,**
**dass** es Mittel (OLT) umfasst, um die niedrigere Übertragungsrate vorübergehend leicht zu erhöhen und vorübergehend leicht zu senken, so dass im Verhältnis zur niedrigeren Übertragungsrate Bit für Bit ein ganzzahliges Größenverhältnis des Anteils der Übertragungsraten (LR, HR) besteht.

3. Übertragungssystem nach Anspruch 2, **dadurch gekennzeichnet,**
**dass** es ein optisches Zugangsnetzwerk ist.

4. Verfahren nach Anspruch 1, **dadurch gekennzeichnet,**
**dass** beide digitale Signal derart zueinander synchronisiert werden, dass die Übergänge zwischen Bits des Signals mit der niedrigeren Übertragungsrate (LR) mit den Übergängen zwischen Bits des Signals mit der höheren Übertragungsrate (HR) übereinstimmen.

## Revendications

1. Procédé de transmission de deux signaux numériques superposés ayant des débits de transmission (LR, HR) différant de telle sorte qu'ils ne sont pas proportionnels en valeur entière, **caractérisé en ce que** le débit de transmission inférieur est légèrement augmenté de manière temporaire et est légèrement diminué de manière temporaire, de sorte que proportionnellement au débit de transmission inférieur (LR) bit par bit une proportion entière de la proportion des bits de transmission (LR, HR) existe.

2. Système de transmission de deux signaux numériques superposés ayant des débits de transmission (LR, HR) différant de telle sorte qu'ils ne sont pas proportionnels en valeur entière, **caractérisé en ce qu'**il comprend des moyens (OLT) pour augmenter légèrement de manière temporaire et diminuer légèrement de manière temporaire le débit de transmission inférieur, de sorte que proportionnellement au débit de transmission inférieur (LR) bit par bit une proportion entière de la proportion des bits de transmission (LR, HR) existe.

3. Système de transmission selon la revendication 2, **caractérisé en ce qu'**il est un réseau à accès optique.

4. Procédé selon la revendication 1, **caractérisé en ce que** les deux signaux numériques sont synchronisés l'un par rapport à l'autre de telle sorte que les transitions entre les bits du signal ayant le débit de transmission inférieur (LR) coïncident avec les transitions entre les bits du signal ayant le débit de transmission supérieur (HR).
